# EUROPEAN PATENT APPLICATION

(11) **EP 3 306 859 A1**
(43) Date of publication of application: **11.04.2018**
(21) Application number: 16802426.3
(22) Date of filing: 04.05.2016
(51) Int. Cl.: H04L 12/24, H04L 29/12

(54) **SERVICE PROTECTION SETTING METHOD, CONTROLLER AND OPTICAL NETWORK DEVICE**

(30) Priority: 05.06.2015 CN 201510307133
(71) Applicant: ZTE Corporation, Shenzhen, Guangdong 518057 (CN)
(72) Inventor: QIAN, Jia, Shenzhen Guangdong 518057 (CN); FU, Xihua, Shenzhen Guangdong 518057 (CN)
(74) Representative: HGF Limited
(86) International application number: PCT/CN2016/081010
(87) International publication number: WO 2016/192503

(57) **Abstract**

Provided are a service protection setting method, a controller and an optical network device, which can realize configuration of service protection of an optical network by extending an OpenFlow protocol. The method includes: a controller sends an OpenFlow message to an optical network node device to instruct the optical network node device to set service protection, herein the controller sends a flow configuration message and a group configuration message to a head node, the controller sends a flow configuration message to a middle node and the controller sends a flow configuration message and a group configuration message to a tail node.

## Description

### Technical Field

This document relates but not limited to the field of communication, in particular to a service protection setting method, a controller and an optical network device.

### Background

Wide Area Network (WAN) services are doubled in a period of 18-24 months, and the traffic accompanied with different services exceeds 1Gbps and the traffic of inter-site interaction has already reached hundreds Gbps. Simultaneously, mobile networks and cloud services also lead service types to become more dynamic and unpredictable. Facing these facts, the existing transport network operation configured statically and manually has not been suitable. Transport networks also need to become more elastic and dynamic to support demands of terminal users.

OpenFlow is a novel network protocol and originated from Clean Slate project team of Stanford University. OpenFlow is based on a forwarding and control separation architecture, and the control logic is separated out from network devices and is handed over to a controller for uniform control to realize flexible deployment of network services. The OpenFlow protocol is used as a standard interface for communication between the controller and a switch.

An OpenFlow-based Software Defined Network (SDN) enables open, application driven and programmable controlled packet forwarding to become possible. However, not all services are based on packet switching, and there are many WAN services which are constructed in packet switches directly through optical fibers, such as data centers. Most deployed WAN services adopt sub-wavelength and wavelength switching technologies in a Synchronous Optical Network (SONET)/Synchronous Digital Hierarchy (SDH) or Optical Transport Network (OTN), and they can directly provide reliable and effective transport services to terminal users or customer routers, and however these technologies do not support OpenFlow at present.

Extension of the OpenFlow protocol is performing to support configuration of optical networks. However, how to configure protected services of optical networks through the OpenFlow protocol is not mentioned.

### Summary

The following is a summary of the subject described in detail in this document. This summary is not used for limiting the protection scope of the claims.

Embodiments of the present invention provide a service protection setting method, a controller and an optical network device, to realize configuration of service protection of an optical network through an OpenFlow protocol.

An embodiment of the present invention provides a service protection setting method, including:
a controller sending an OpenFlow message to an optical network node device to instruct the optical network node device to set service protection;
herein the optical network node device includes a head node, a middle node and a tail node, and
the step of a controller sending an OpenFlow message to an optical network node device includes:
   the controller sending a flow configuration message and a group configuration message to the head node, and the controller sending a flow configuration message to the middle node and the controller sending a flow configuration message and a group configuration message to the tail node.

In an exemplary embodiment, the step of a controller sending an OpenFlow message to an optical network node device further includes:
the controller sending an Autonomous Function (AF) configuration message to the optical network node device and configuring an AF table entry for the optical network node device; and
the flow configuration messages sent by the controller to the head node and the tail node carrying an identification of the AF table entry.

In an exemplary embodiment, the flow configuration message includes cross configuration information, and the number of the flow configuration messages is equal to the number of crosses to be configured, and one flow configuration message is used for configuring one cross and the group configuration message includes protection group configuration information.

In an exemplary embodiment, the AF table entry includes protection group member role information and alarm monitoring configuration information.

In an exemplary embodiment, the flow configuration message and the group configuration message are carried in a bundle message, and bundle messages sent to the same network node device carry the same bundle identification.

An embodiment of the present invention further provides a service protection setting method, including:
an optical network node device receiving an OpenFlow message sent by a controller and setting service protection according to an instruction of the OpenFlow message,
herein,
the step of an optical network node device receiving an OpenFlow message sent by the controller includes:
   when the optical network node device is a head node or a tail node, receiving a flow configuration message and a group configuration message sent by the controller; and
   when the optical network node device is a middle node, receiving a flow configuration message sent by the controller.

In an exemplary embodiment, the step of an optical network node device receiving an OpenFlow message sent by a controller further includes:
the optical network node device receiving an Autonomous Function (AF) configuration message sent by the controller and saving an AF table entry configured by the controller for the network node device according to the AF configuration message; and
when the optical network node device is a head node or a tail node, the received flow configuration message carrying an AF identification.

In an exemplary embodiment, the flow configuration message and the group configuration message are carried in a bundle message, and bundle messages sent to the same network node device carry the same bundle identification.

In an exemplary embodiment, the flow configuration message and the group configuration message are carried in a bundle addition message, and the step of setting service protection according to an instruction of the OpenFlow message includes:
when the optical network node device is a head node or a tail node, receiving a bundle addition message sent by the controller, saving the flow configuration message and the group configuration message carried in the bundle addition message, and after a bundle execution message is received, performing cross configuration, alarm monitoring configuration and protection group configuration according to the flow configuration message and the group configuration message; and
when the optical network node is a middle node, receiving a bundle addition message sent by the controller, saving the flow configuration message carried in the bundle addition message, and after a bundle execution message is received, performing cross configuration according to the flow configuration message.

In an exemplary embodiment, the step of performing cross configuration, alarm monitoring configuration and protection group configuration according to the flow configuration message and the group configuration message includes:
performing cross configuration according to the flow configuration message, performing alarm monitoring configuration according to alarm monitoring configuration information in an AF table entry corresponding to an AF identification carried in the flow configuration message, and performing protection group configuration in combination with protection group member role information in the AF table entry and the group configuration message.

An embodiment of the present invention further provides a controller, including:
a sending unit configured to send an OpenFlow message to an optical network node device to instruct the optical network node device to set service protection,
herein the optical network node device includes a head node, a middle node and a tail node, and
the sending unit includes:
   a first sending module configured to send a flow configuration message and a group configuration message to the head node;
   a second sending module configured to send a flow configuration message to the middle node; and
   a third sending module configured to send a flow configuration message and a group configuration message to the tail node.

In an exemplary embodiment, the controller further includes:
a configuration unit configured to configure an AF table entry for the optical network node device;
the sending unit further includes a fourth sending module configured to send an AF configuration message to the optical network node device; and
the flow configuration messages sent by the first sending module and the third sending module carry an identification of the AF table entry.

In an exemplary embodiment, the flow configuration message includes cross configuration information, the number of the flow configuration messages is equal to the number of crosses to be configured, one flow configuration message is used for configuring one cross and the group configuration message includes protection group configuration information.

In an exemplary embodiment, the AF table entry includes alarm monitoring configuration information and protection group member role information.

In an exemplary embodiment, the flow configuration message and the group configuration message are carried in a bundle message, and bundle messages sent to the same network node device carry the same bundle identification.

An embodiment of the present invention further provides an optical network node device, including:
a receiving unit configured to receive an OpenFlow message sent by a controller; and
a protection setting unit configured to set service protection according to an instruction of the OpenFlow message,
herein the OpenFlow message includes a flow configuration message and a group configuration message;
when the network node device is a head node or a tail node, the receiving unit is configured to receive the flow configuration message and the group configuration message sent by the controller; and
when the network node device is a middle node, the receiving unit is configured to receive the flow configuration message sent by the controller.

In an exemplary embodiment, the OpenFlow message further includes an Autonomous Function (AF) configuration message which is used for configuring an AF table entry for the optical network node device;
the optical network node device further includes:
a saving unit configured to save the AF table entry configured by the controller for the optical network node device; and
when the network node device is a head node or a tail node, the flow configuration message received by the receiving unit carries an AF identification.

In an exemplary embodiment, the flow configuration message and the group configuration message are carried in a bundle message, and bundle messages sent to the same network node device carry the same bundle identification.

In an exemplary embodiment, the flow configuration message and the group configuration message are carried in a bundle addition message; when the optical network node device is a head node or a tail node, the receiving unit is configured to receive the bundle addition message sent by the controller, the saving unit is further configured to save the flow configuration message and the group configuration message carried in the bundle addition message, and the protection setting unit is configured to, after the receiving unit receives a bundle execution message, perform cross configuration, alarm monitoring configuration and protection group configuration according to the flow configuration message and the group configuration message; and
when the optical network node device is a middle node, the receiving unit is configured to receive the bundle addition message sent by the controller, the saving unit is further configured to save the flow configuration message carried in the bundle addition message, and the protection setting unit is configured to, after the receiving unit receives a bundle execution message, perform cross configuration according to the flow configuration message.

In an exemplary embodiment, when the optical network node device is a head node or a tail node, the protection setting unit is configured to, after the receiving unit receives a bundle execution message, perform cross configuration according to the flow configuration message, perform alarm monitoring configuration according to alarm monitoring configuration information in an AF table entry corresponding to an AF identification carried in the flow configuration message, and perform protection group configuration in combination with group member role information in the AF table entry and the group configuration message.

Embodiments of the present invention realize configuration of service protection of an optical network by extending the OpenFlow protocol. Herein, the configuration process can be simplified and the configuration time can be shortened by using the AF table entry.

After the drawings and detailed description are read and understood, other aspects can be understood.

### Brief Description of Drawings

FIG. 1 illustrates a flowchart of a service protection setting method according to an embodiment of the present invention.
FIG. 2 illustrates a flowchart of another service protection setting method according to an embodiment of the present invention.
FIG. 3 illustrates a structural schematic diagram of a controller according to an embodiment of the present invention.
FIG. 4 illustrates a structural schematic diagram of a sending unit of a controller according to an embodiment of the present invention.
FIG. 5 illustrates a structural schematic diagram of a network node device according to an embodiment of the present invention.
FIG. 6 illustrates a schematic diagram of service protection according to an embodiment of the present invention.
FIG. 7 illustrates a schematic diagram of a head node cross of 1+1 linear protection according to an embodiment of the present invention.
FIG. 8 illustrates a schematic diagram of interaction between a controller and a head node device according to embodiment two of the present invention.
FIG. 9 illustrates a diagram of a content relation of an OFPT_FLOW_MOD message in step 712 according to embodiment two of the present invention.
FIG. 10 illustrates a diagram of a content of an OFPT_GROUP_MOD message in step 716 according to embodiment two of the present invention.
FIG. 11 illustrates a schematic diagram of a middle node cross according to an embodiment of the present invention.
FIG. 12 illustrates a schematic diagram of interaction between a controller and a middle node device according to embodiment two of the present invention.
FIG. 13 illustrates a schematic diagram of a head node cross of 1:1 linear protection according to embodiment four of the present invention.
FIG. 14 illustrates a schematic diagram of interaction between a head node controller and a device according to embodiment four of the present invention.
FIG. 15 illustrates schematic diagrams of head node crosses before and after recovery according to embodiment five of the present invention.
FIG. 16 illustrates a schematic diagram of interaction between a controller and a head node device according to embodiment five of the present invention.
FIG. 17 illustrates a schematic diagram of a content of an OFPT_GROUP_MOD message in step 1004 according to embodiment five of the present invention.
FIG. 18 illustrates schematic diagrams of head node crosses before and after recovery according to embodiment six of the present invention.
FIG. 19 illustrates a schematic diagram of interaction between a controller and a head node device according to embodiment six of the present invention.
FIG. 20 illustrates schematic diagrams of head node crosses before and after return according to embodiment seven of the present invention.
FIG. 21 illustrates a schematic diagram of interaction between a head node controller and a device according to embodiment seven of the present invention.

### Detailed Description

The technical solution of the present invention will be described below in more detail with reference to the drawings in combination with the embodiments.

It needs to be stated that the embodiments of the present invention and the features in the embodiments may be mutually combined under a situation of no conflict, and all combinations are included in the protective scope of the present invention. In addition, although logic sequences are illustrated in flowcharts, under some situations, the illustrated or described steps may be executed according to sequences different from the sequences here.

An embodiment of the present invention provides a service protection setting method, including that:
a controller sends an OpenFlow message to an optical network node device to instruct the optical network node device to set service protection.

In an exemplary embodiment, the optical network node device includes a head node, a middle node and a tail node.

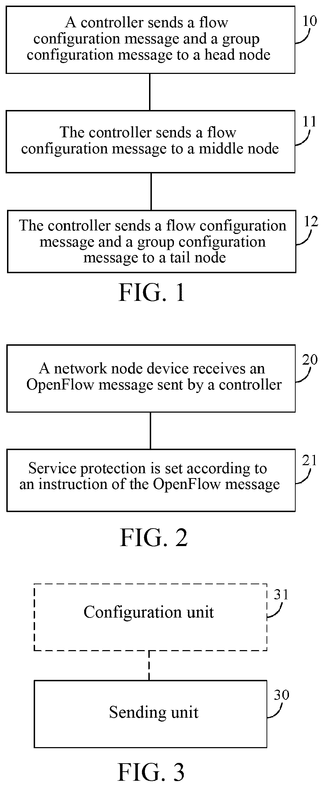

As illustrated in FIG. 1, the step that the controller sends the OpenFlow message to the optical network node device may include the following steps 10-12.

In step 10, the controller sends a flow configuration message and a group configuration message to the head node.

In step 11, the controller sends a flow configuration message to the middle node.

In step 12, the controller sends a flow configuration message and a group configuration message to the tail node.

The flow configuration message includes cross configuration information, and the group configuration message includes protection group configuration information.

To facilitate description, according to the position at which the network node device is located, the step that the controller sends the OpenFlow message is divided into the above-mentioned three steps. However, steps 10-12 do not have a strict sequence. One skilled in the art can understand that the controller may simultaneously send the OpenFlow message to all optical network node devices controlled by the controller itself, and may also send the OpenFlow message according to any sequence.

Herein, the controller may also send an Autonomous Function (AF) configuration message to the optical network node device and configure an AF table entry for the optical network node device, and the AF table entry may include alarm monitoring configuration information and protection group member role information.

The flow configuration message sent by the controller to the head node and the tail node carries an identification of the AF table entry.

AF is a processing structure and is used for executing a set of data channel behaviors and/or control operations assigned to a switch. When the controller does not have a capability or interest in controlling or changing these behaviors, these data channel behaviors may be allocated to one AF. Control operations are possibly assigned to the switch because one controller cannot always make a reply to certain factors, or sometimes cannot make an enough quick reply. The controller instantiates one AF in a pipe by containing one reference in one table entry to point to one AF, and subsequently the AF can autonomously operate. Subsequently, the interaction of the controller may be limited to a request initiated by the controller or a state notification initiated by the AF.

In an exemplary embodiment, the number of the flow configuration messages is equal to the number of crosses to be configured, and one flow configuration message is used for configuring one cross.

In an exemplary embodiment, the flow configuration message and the group configuration message are carried in a bundle message, and bundle messages sent to the same network node device carry the same bundle identification.

The optical network in embodiments of the present invention is not limited to an OTN or SONET/SDH.

An embodiment of the present invention further provides a service protection setting method. As illustrated in FIG. 2, the method includes the following steps 20-21.

In step 20, an optical network node device receives an OpenFlow message sent by a controller.

In step 21, service protection is set according to an instruction of the OpenFlow message.

In an exemplary embodiment, when the optical network node device is a head node or a tail node, a flow configuration message and a group configuration message sent by the controller are received; and
when the optical network node device is a middle node, a flow configuration message sent by the controller is received.

In an exemplary embodiment, the step that the optical network node device receives the OpenFlow message sent by the controller further includes that:
the optical network node device receives an Autonomous Function (AF) configuration message sent by the controller, and saves an AF table entry configured by the controller for the network node device according to the AF configuration message; and
when the optical network node device is a head node or a tail node, the received flow configuration message carries an AF identification.

The flow configuration message and the group configuration message are carried in a bundle message, and bundle messages sent to the same network node device carry the same bundle identification.

In an exemplary embodiment, the flow configuration message and the group configuration message are carried in a bundle addition message, and the step that service protection is set according to the instruction of the OpenFlow message includes that:
when the optical network node device is a head node or a tail node, the bundle addition message sent by the controller is received, and the flow configuration message and the group configuration message carried in the bundle addition message are saved, and after a bundle execution message is received, cross configuration, alarm monitoring configuration and protection group configuration are performed according to the flow configuration message and the group configuration message; and
when the optical network node is a middle node, the bundle addition message sent by the controller is received, and the flow configuration message carried in the bundle addition message is saved, and after a bundle execution message is received, cross configuration is performed according to the flow configuration message.

In an exemplary embodiment, the step that cross configuration, alarm monitoring configuration and protection group configuration are performed according to the flow configuration message and the group configuration message includes that:
cross configuration is performed according to the flow configuration message, and alarm monitoring configuration is performed according to alarm monitoring configuration information in an AF table entry corresponding to an AF identification carried in the flow configuration message, and protection group configuration is performed in combination with protection group member role information in the AF table entry and the group configuration message.

An embodiment of the present invention further provides a computer storage medium, and computer-executable instructions are stored in the computer storage medium, and the computer-executable instructions are used for executing any above-mentioned method.

An embodiment of the present invention further provides a controller. As illustrated in FIG. 3, the controller includes:
a sending unit 30 configured to send an OpenFlow message to an optical network node device to instruct the optical network node device to set service protection.

In an exemplary embodiment, the optical network node device includes a head node, a middle node and a tail node.

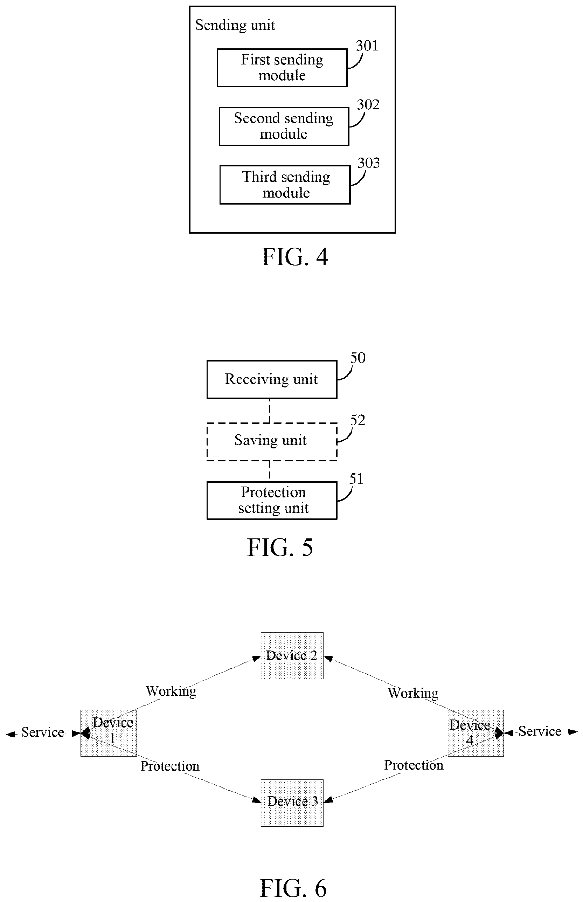

As illustrated in FIG. 4, the sending unit may include a first sending module 301, a second sending module 302 and a third sending module 303.

The first sending module 301 is configured to send a flow configuration message and a group configuration message to the head node.

The second sending module 302 is configured to send a flow configuration message to the middle node.

The third sending module 303 is configured to send a flow configuration message and a group configuration message to the tail node.

As illustrated in FIG. 3, the controller may further include a configuration unit 31.

The configuration unit 31 is configured to configure an AF table entry for the optical network node device.

The sending unit may further include a fourth sending module configured to send an AF configuration message to the optical network node device.

The flow configuration messages sent by the first sending module and the third sending module carry an identification of the AF table entry.

In an exemplary embodiment, the flow configuration message includes cross configuration information, and the number of the flow configuration messages is equal to the number of crosses to be configured, and one flow configuration message is used for configuring one cross and the group configuration message includes protection group configuration information.

In an exemplary embodiment, the AF table entry includes alarm monitoring configuration information and protection group member role information.

In an exemplary embodiment, the flow configuration message and the group configuration message are carried in a bundle message, and bundle messages sent to the same network node device carry the same bundle identification.

As illustrated in FIG. 5, an embodiment of the present invention further provides a network node device, including a receiving unit 50 and a protection setting unit 51.

The receiving unit 50 is configured to receive an OpenFlow message sent by a controller.

The protection setting unit 51 is configured to set service protection according to an instruction of the OpenFlow message.

In an exemplary embodiment, when the network node device is a head node or a tail node, the receiving unit is configured to receive the flow configuration message and the group configuration message sent by the controller; and
when the network node device is a middle node, the receiving unit is configured to receive the flow configuration message sent by the controller.

In an exemplary embodiment, the OpenFlow message further includes an Autonomous Function (AF) configuration message which is used for configuring an AF table entry for the optical network node device.

As illustrated in FIG. 5, the optical network node device may further include:
a saving unit 52 configured to save the AF table entry configured by the controller for the optical network node device; and
when the network node device is a head node or a tail node, the flow configuration message received by the receiving unit carries an AF identification.

In an exemplary embodiment, the flow configuration message and the group configuration message are carried in a bundle message, and bundle messages sent to the same network node device carry the same bundle identification.

In an exemplary embodiment, the flow configuration message and the group configuration message are carried in a bundle addition message.

When the optical network node device is a head node or a tail node, the receiving unit is configured to receive the bundle addition message sent by the controller, and the saving unit is further configured to save the flow configuration message and the group configuration message carried in the bundle addition message, and the protection setting unit is configured to, after the receiving unit receives a bundle execution message, perform cross configuration, alarm monitoring configuration and protection group configuration according to the flow configuration message and the group configuration message.

When the network node device is a middle node, the receiving unit is configured to receive the bundle addition message sent by the controller, the saving unit is further configured to save the flow configuration message carried in the bundle addition message, and the protection setting unit is configured to, after the receiving unit receives a bundle execution message, perform cross configuration according to the flow configuration message.

In an exemplary embodiment, when the optical network node device is a head node or a tail node, the protection setting unit is configured to, after the receiving unit receives a bundle execution message, perform cross configuration according to the flow configuration message, and perform alarm monitoring configuration according to alarm monitoring configuration information in an AF table entry corresponding to an AF identification carried in the flow configuration message, and perform protection group configuration in combination with group member role information in the AF table entry and the group configuration message.

### Embodiment one

In step 600, a controller sends multiple AF modification (OFPT_AF_MOD) messages to an optical network node device, herein the command is ONF_ET_AFC_ADD which indicates to newly add an AF table entry, and the AF table entry is used for alarm monitoring configuration and protection group member role configuration, and after the optical network node device receives the messages, configuration and storage of the AF table entry are performed.

In step 601, the controller sends a bundle control (OFPT_BUNDLE_CONTROL) message to a device of a head/tail node of a linear protection service. Herein, the message includes type, bundle identification (bundle_id) and flags. The type is the opening request (OFPBCT_OPEN_REQUEST), and the bundle_id is an identification of the bundle, and the bundle control (OFPT_BUNDLE_CONTROL) message indicates to open the bundle corresponding to the identification, and the flags is OFPBF_ATOMIC which indicates atomic operation. The device checks that there is no bundle using the bundle_id as a keyword at current after the device receives the message, and thus sends an OFPT_BUNDLE_CONTROL message to the controller, herein the type of the OFPT_BUNDLE_CONTROL message is OFPBCT_OPEN_REPLY (opening reply) which indicates a reply to the opening request.

In step 602, the controller then continuously sends multiple (determined according to the number of crosses) OFPT_BUNDLE_ADD (bundle addition) messages carrying the same bundle_id to the device, herein flags is OFPBF_ATOMIC which indicates atomic operation. An OFPT_FLOW_MOD message (flow modification) is carried and indicates cross information of operation which needs to be performed on the device, and the OFPT_FLOW_MOD message carries an identification of an AF table entry; and the device checks and stores the message after the device receives the message.

In step 603, the controller continues to send an OFPT_DUNDLE_ADD message carrying the same bundle_id to the device, herein an OFPT_GROUP_MOD (group modification) message is carried, and indicates protection group information of operation which needs to be performed on the device; and the device checks and stores the message after the device receives the message.

In step 604, the controller continues to send an OFPT_BUNDLE_CONTROL message carrying the same bundle_id to the device to instruct the device to start to execute the bundle, herein the type is OFPBCT_COMMIT_REQUEST (execution request); and the device takes out the multiple stored OFPT_FLOW_MOD messages and one stored OFPT_GROUP_MOD message, then performs cross configuration, protection group configuration and alarm monitoring configuration to complete service protection configuration of the head/tail node, and sends an OFPT_BUNDLE_CONTROL message to the controller. Here, the type of the OFPT_BUNDLE_CONTROL message is OFPBCT_COMMIT_REPLY (execution reply) which indicates a reply to the execution request.

In step 605, the controller sends an OFPT_BUNDLE_CONTROL message (bundle control) to a device of a middle node of a linear protection service. Herein, the type is OFPBCT_OPEN_REQUEST (opening request), and the bundle_id is an identifier of the bundle, and the OFPT_BUNDLE_CONTROL message indicates to open a bundle, and the flags is OFPBF_ATOMIC which indicates atomic operation. The device checks that there is no bundle using the bundle_id as a keyword at current after the device receives the message, and thus sends an OFPT_BUNDLE_CONTROL message to the controller, herein the type is OFPBCT_OPEN_REPLY (opening reply) which indicates a reply to the opening request.

In step 606, the controller then continuously sends multiple (determined according to the number of crosses) OFPT_BUNDLE_ADD messages carrying the same bundle_id to the device. Herein the flags is OFPBF_ATOMIC which indicates atomic operation, and an OFPT_FLOW_MOD message is carried, and indicates cross information of operation which needs to be performed on the device; and the device checks and stores the message after the device receives the message.

In step 607, the controller sends an OFPT_BUNDLE_CONTROL message carrying the same bundle_id to the device to instruct the device to start to execute the bundle. Herein, the type of the OFPT_BUNDLE_CONTROL message is OFPBCT_COMMIT_REQUEST (execution request); and the device takes out the multiple stored OFPT_FLPW_MOD messages, then performs cross configuration to complete service configuration of the middle node, and sends an OFPT_BUNDLE_CONTROL message to the controller, herein the type is OFPBCT_COMMIT_REPLY (execution reply) which indicates a reply to the execution request.

### Embodiment two

This embodiment takes establishment of an OTN 1+1 linear protection service from device 1 (head node) to device 4 (tail node) illustrated in FIG. 6 as an example. Herein, device 1-device 2-device 4 is a working path thereof, and device 1-device 3-device 4 is a protection path thereof. Specific steps include the following steps.

In step 70, a controller sends OFPT_AF_MOD messages to all devices controlled by the controller itself to perform AF table configuration. Herein, each message contains AF identification (af_id, which uniquely identifies an AF table entry), AF type (type), value (values of different AF types are different), associated AF identification (mp_af_id). Configured table entry information is as shown in Table 1.

**Table 1**

| af id | Type | Value | mp_af_id |
|---|---|---|---|
| 1 | ONF_ET_AFT_OTN_ODUK T_MP | TCM5 | ONF_ET_A F_NONE |
| 2 | ONF_ET_AFT_OTN_LP | ONF_ET_AFT_LINEAR_PROTE CT_ROLE_NORMAL | ONF_ET_A F_NONE |
| 3 | ONF_ET_AFT_OTN_LP | ONF_ET_AFT_LINEAR_PROTE CT_ROLE_WORK | 1 |
| 4 | ONF_ET_AFT_OTN_LP | ONF_ET_AFT_LINEAR_PROTE CT_ROLE_PROTECT | 1 |
| 5 | ONF_ET_AFT_OTN_LP | ONF_ET_AFT_LINEAR_PROTE CT_ROLE_WORK | ONF_ET_A F_NONE |
| 6 | ONF_ET_AFT_OTN_LP | ONF_ET_AFT_LINEAR_PROTE CT_ROLE_PROTECT | ONF_ET_A F_NONE |
| 7 | ONF_ET_AFT_OTN_LP_MT ON | ONF_ET_AFT_LINEAR_PROTE CT_ROLE_NORMAL | ONF_ET_A F_NONE |
| 8 | ONF_ET_AFT_OTN_LP_MT ON | ONF_ET_AFT_LINEAR_PROTE CT_ROLE_WORK | 1 |
| 9 | ONF_ET_AFT_OTN_LP_MT ON | ONF_ET_AFT_LINEAR_PROTE CT_ROLE_PROTECT | 1 |

Table entry 1 indicates that it is an alarm monitoring AF of one ODUkt and TCM5 alarm information of an ODU layer needs to be monitored and there is no associated AF table entry.

Table entry 2 indicates that it is an OTN linear 1+1 protection AF and a role represented by the table entry 2 is normal and there is no associated AF table entry.

Table entry 3 indicates that it is an OTN linear 1+1 protection AF, and a role represented by the table entry 3 is work and it is associated with table entry 1.

Table entry 4 indicates that it is an OTN linear 1+1 protection AF and a role represented by the table entry 4 is protection and it is associated with table entry 1.

Table entry 5 indicates that it is an OTN linear 1+1 protection AF and a role represented by the table entry 5 is working and there is no associated AF table entry.

Table entry 6 indicates that it is an OTN linear 1+1 protection AF and a role represented by the table entry 6 is protection and there is no associated AF table entry.

Table entry 7 indicates that it is an OTN linear M:N protection AF and a role represented by the table entry 7 is normal and there is no associated AF table entry.

Table entry 8 indicates that it is an OTN linear M:N protection AF and a role represented by the table entry 8 is working and it is associated with AF table entry 1.

Table entry 9 indicates that it is an OTN linear M:N protection AF and a role represented by the table entry 9 is protection and it is associated with AF table entry 1.

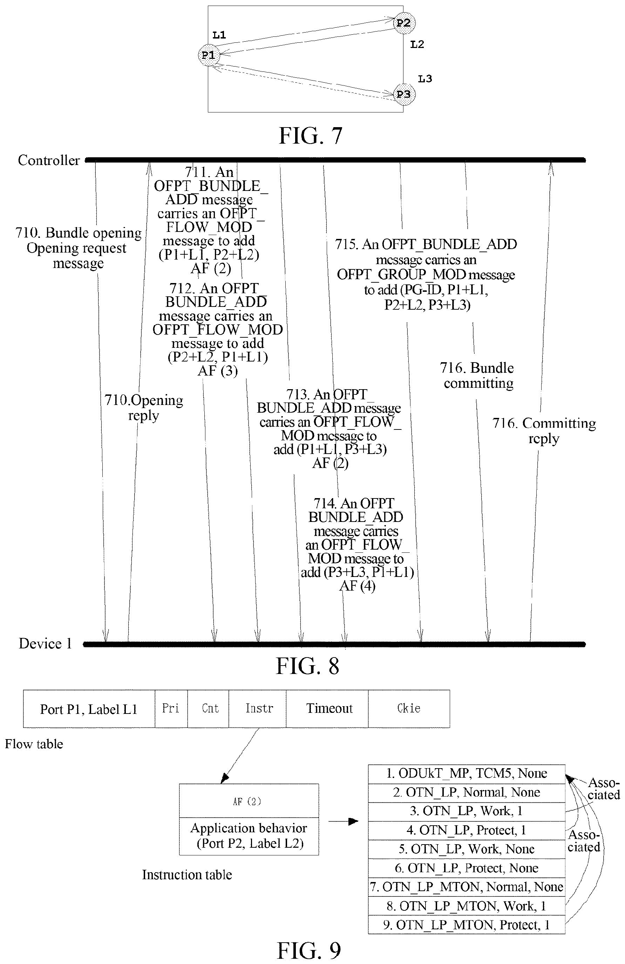

In step 71, service protection of a head node is configured. A cross situation of the head node is as illustrated in FIG. 7. A process for configuring service protection of the head node is as illustrated in FIG. 8 and includes the following steps 710-716.

In step 710, a controller sends an OFPT_BUNDLE_CONTROL message to device 1, herein the type of the message is OFPBCT_OPEN_REQUEST, and the bundle_id is 1 and the message indicates to open a bundle numbered as 1, and the flags of the message is OFPBF_ATOMIC which indicates atomic operation. And device 1 checks that there is no bundle numbered as 1 at current after the device 1 receives the message, and thus sends an OFPT_BUNDLE_CONTROL message to the controller, herein the type of the message is OFPBCT_OPEN_REPLY which indicates a reply to OFPBCT_OPEN_REQUEST. Herein, the bundle message guarantees that the controller sends a group of complete messages or the state consistency of messages simultaneously sent by the controller to multiple devices.

In step 711, the controller sends an OFPT_BUNDLE_ADD message carrying bundle_id 1 to device 1, herein the flags is OFPBF_ATOMIC which indicates atomic operation, and the message carries an OFPT_FLOW_MOD (the command is OFPFC ADD) message which indicates to set a cross in a direction from port P1 to port P2, and the flow modification message carries an AF instruction with af_id 2 (which indicates that a match domain (P1+L1) in the flow modification message is a normal connection point in OTN linear protection); and the device checks and stores the message after the device receives the message. Content of the carried OFPT_FLOW_MOD (OFPFC_ADD) is as illustrated in FIG. 9.

In step 712, the controller continues to send an OFPT_BUNDLE_ADD message carrying bundle_id 1 to device 1. Herein, the flags is OFPBF_ATOMIC which indicates atomic operation, and an OFPT_FLOW_MOD (OFPFC_ADD) message is carried and indicates to set a cross in a direction from P2 to P1, and the flow table entry carries an AF instruction with af_id 3 (which indicates that a match domain (P2+L2) in the OFPT_FLOW_MOD (OFPFC_ADD) message is a working connection point in OTN linear protection, and the TCM5 alarm on the match domain (P2+L2) needs to be monitored). And the device checks and continues to store the message after the device receives the message.

In step 713, the controller continues to send an OFPT_BUNDLE_ADD message carrying bundle_id 1 to device 1. Herein, the flags is OFPBF_ATOMIC which indicates atomic operation, and an OFPT_FLOW_MOD (OFPFC_ADD) message is carried and indicates to set a cross in a direction from P1 to P3, and the flow table entry carries an AF instruction with af_id 2 (which indicates that a match domain (P1+L1) in the OFPT_FLOW_MOD (OFPFC_ADD) message is a normal connection point in OTN linear protection). And the device checks the message and still stores the message after the device receives the message.

In step 714, the controller continues to send an OFPT_BUNDLE_ADD message carrying bundle_id 1 to device 1. Herein, the flags is OFPBF_ATOMIC which indicates atomic operation, and an OFPT_FLOW_MOD (OFPFC_ADD) message is carried and indicates to set a cross in a direction from P3 to P1, and the flow table entry carries an AF instruction with af_id 4 (AF1 indicates that a match domain (P3+L3) in the OFPT_FLOW_MOD (OFPFC_ADD) message is a protection connection point in OTN linear protection, and the TCM5 alarm on the match domain (P3+L3) needs to be monitored). And the device checks the message and continues to store the message after the device receives the message.

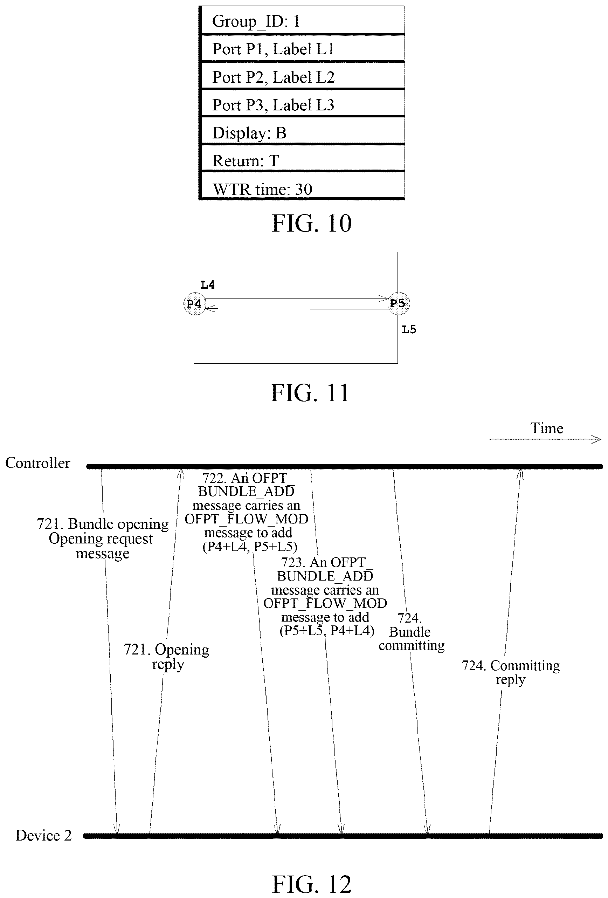

In step 715, the controller sends an OFPT_BUNDLE_ADD message carrying bundle_id 1 to device 1. Herein an OFPT_GROUP_MOD (OFPGC_ADD) message is carried and indicates protection group port and resource information which needs to be configured, respectively including protection group type (OFPGT_EXP_OTN_LP), protection group ID, out-port P1 and label L1, in-port P2 and label L2, and in-port P3 and label L3, and a group attribute carries protection group related parameters, such as WTR time, return type and switching type. And the device checks and stores the message after the device receives the message. Content of the carried OFPT_GROUP_MOD (OFPGC_ADD) message is as illustrated in FIG. 10.

In step 716, the controller continues to send an OFPT_BUNDLE_CONTROL message carrying bundle_id 1 to device 1 to instruct the device to start to execute the bundle, herein the type is OFPBCT_COMMIT_REQUEST; and the device takes out the four stored OFPT_FLOW_MOD messages and one stored OFPT_GROUP_MOD message, then assembles a cross configuration, protection group configuration and alarm monitoring configuration message which is jointly configured to complete service configuration of the head node, and sends to the controller an OFPT_BUNDLE_CONTROL message, of which the type is OFPBCT_COMMIT_REPLY, indicating a reply to the execution request.

In step 72, service of a middle node (for example, device 2) is configured, and a cross situation thereof is as illustrated in FIG. 11, and a configuration process is as illustrated in FIG. 12 and includes the following steps 721-724.

In step 721, the controller sends an OFPT_BUNDLE_CONTROL message to device 2, of which the type is OFPBCT_OPEN_REQUEST, and the bundle_id is 2, and the OFPT_BUNDLE_CONTROL message indicates to open a bundle numbered as 2. The flags of the OFPT_BUNDLE_CONTROL message is OFPBF ATOMIC which indicates atomic operation. And device 2 checks that there is no bundle numbered as 2 at current after device 2 receives the message, and thus sends to the controller an OFPT_BUNDLE_CONTROL message, of which the type is OFPBCT_OPEN_REPLY, indicating a reply to the opening request.

In step 722, the controller then sends an OFPT_BUNDLE_ADD message carrying bundle_id 2 to device 2, herein the flags is OFPBF_ATOMIC which indicates atomic operation, and an OFPT_FLOW_MOD (OFPFC ADD) message is carried and indicates to set a cross in a direction from P4 to P5; and the device checks and stores the message after the device receives the message.

In step 723, the controller continues to send an OFPT_BUNDLE_ADD message carrying bundle_id 2 to device 2, herein the flags is OFPBF_ATOMIC which indicates atomic operation, and an OFPT_FLOW_MOD (OFPFC_ADD) message is carried and indicates to set a cross in a direction from P5 to P4; and the device checks the message and continues to store the message after the device receives the message.

In step 724, the controller sends an OFPT_BUNDLE_CONTROL message carrying bundle_id 2 to device 2 to instruct the device to start to execute the bundle, herein the type of the OFPT_BUNDLE_CONTROL message is OFPBCT_COMMIT_TREQUEST; and the device takes out the two stored OFPT_FLOW_MOD messages, then assembles a cross configuration message to configure to a transport plane and complete the service configuration of the middle node, and sends to the controller an OFPT_BUNDLE_CONTROL message of which the type is OFPBCT_COMMIT_REPLY.

In step 73, service protection of a tail node (device 4) is configured, where this step includes the following steps 730-737.

In step 730, the controller sends to device 4 an OFPT_BUNDLE_CONTROL message, of which the type is OFPBCT_OPEN_REQUEST and the bundle_id is 4. The OFPT_BUNDLE_CONTROL message indicates to open a bundle numbered as 4 and the flags of the message is OFPBF_ATOMIC which indicates atomic operation. And device 4 checks that there is no bundle numbered as 4 at current after device 4 receives the message, and thus sends an OFPT_BUNDLE_CONTROL message to the controller, herein the type of the message is OFPBCT_OPEN_REPLY which indicates a reply to OFPBCT_OPEN_REQUEST. Herein, the bundle message guarantees that the controller sends a group of complete messages or the state consistency of messages simultaneously sent by the controller to multiple devices.

In step 731, the controller sends an OFPT_BUNDLE_ADD message carrying bundle_id 4 to device 4, herein the flags of the OFPT_BUNDLE_ADD message is OFPBF_ATOMIC which indicates atomic operation, and the message carries an OFPT_FLOW_MOD (the command is OFPFC_ADD) message which indicates to set a cross in a direction from port P6 to port P7, and the flow modification message carries an AF instruction with af_id 2 (which indicates that a match domain (P6+L6) in the flow modification message is a normal connection point in OTN linear protection); and the device checks and stores the message after the device receives the message.

In step 733, the controller continues to send an OFPT_BUNDLE_ADD message carrying bundle_id 4 to device 4, herein the flags is OFPBF_ATOMIC which indicates atomic operation, and an OFPT_FLOW_MOD (OFPFC_ADD) message is carried and indicates to set a cross in a direction from P7 to P6, and the flow table entry carries an AF instruction with af_id 3 (which indicates that a match domain (P7+L7) in the OFPT_FLOW_MOD (OFPFC_ADD) message is a working connection point in OTN linear protection, and the TCM5 alarm on the match domain (P7+L7) needs to be monitored); and the device checks the message and continues to store the message after the device receives the message.

In step 734, the controller continues to send an OFPT_BUNDLE_ADD message carrying bundle_id 4 to device 4, herein the flags is OFPBF_ATOMIC which indicates atomic operation, and an OFPT_FLOW_MOD (OFPFC_ADD) message is carried and indicates to set a cross in a direction from P6 to P8, and the flow table entry carries an AF instruction with af_id 2 (which indicates that a match domain (P6+L6) in the OFPT_FLOW_MOD (OFPFC_ADD) message is a normal connection point in OTN linear protection); and the device checks the message and still stores the message after the device receives the message.

In step 735, the controller continues to send an OFPT_BUNDLE_ADD message carrying bundle_id 4 to device 4, herein the flags is OFPBF_ATOMIC which indicates atomic operation, and an OFPT_FLOW_MOD (OFPFC_ADD) message is carried and indicates to set a cross in a direction from P8 to P6, and the flow table entry carries an AF instruction with af_id 4 (AF4 indicates that a match domain (P8+L8) in the OFPT_FLOW_MOD (OFPFC_ADD) message is a protection connection point in OTN linear protection, and the TCM5 alarm on the match domain (P8+L8) needs to be monitored); and the device checks the message and continues to store the message after the device receives the message.

In step 736, the controller sends an OFPT_BUNDLE_ADD message carrying bundle_id 4 to device 4, herein an OFPT_GROUP_MOD (OFPGC_ADD) message is carried and indicates protection group port and resource information which needs to be configured, respectively including protection group type (OFPGT_EXP_OTN_LP), protection group ID, out-port P6 and label L6, in-port P7 and label L7, and in-port P8 and label L8, and a group attribute carries protection group related parameters, such as WTR time, return type and switching type; and the device checks and stores the message after the device receives the message.

In step 737, the controller continues to send an OFPT_BUNDLE_CONTROL message carrying bundle_id 4 to device 4 to instruct the device to start to execute the bundle, herein the type of the OFPT_BUNDLE_CONTROL message is OFPBCT_COMMIT_REQUEST; and the device takes out the four stored OFPT_FLOW_MOD messages and one stored OFPT_GROUP_MOD message, then assembles a cross configuration, protection group configuration and alarm monitoring configuration message which is jointly configured to complete service configuration of the tail node, and sends to the controller an OFPT_BUNDLE_CONTROL message, of which the type is OFPBCT_COMMIT_REPLY, indicating a reply to the execution request.

### Embodiment three

An OTN 1+1 linear protection service illustrated in FIG. 6 is deleted. Specific steps are the same as those in embodiment two. A difference lies in that the commands of the OFPT_FLOW_MOD message and the OFPT_GROUP_MOD message carried in the OFPT_BUNDLE_ADD message are respectively OFPFC_DELETE and OFPGC_DEL, which indicate to delete cross, protection group and alarm monitoring information.

### Embodiment four

An OTN 1:1 linear protection service (i.e., M:N linear protection when M=1 and N=1) illustrated in FIG. 6 is established, and the service is from device 1 (head node) to device 4 (tail node). Herein, device 1-device 2-device 4 is a working path thereof, and device 1-device 3-device 4 is a protection path thereof. Specific steps of establishing the OTN 1:1 linear protection service illustrated in FIG. 6 include the following steps.

In step 90, AF table entries are configured, and this step is the same as the step 70 and thus is not repetitively described.

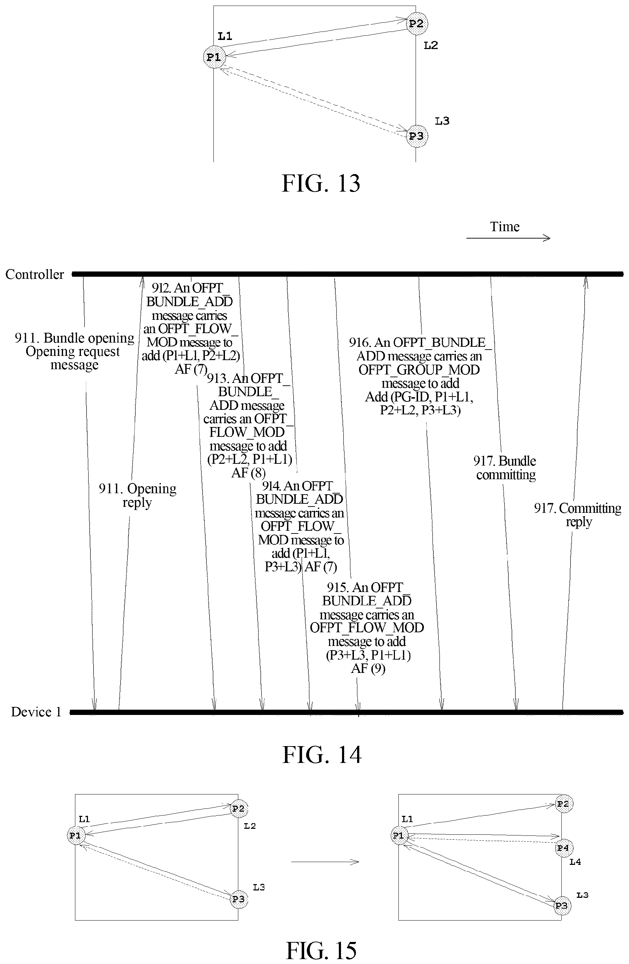

In step 91, service protection of a head node is configured. A cross situation of the head node is as illustrated in FIG. 13. A configuration process is as illustrated in FIG. 14 and includes the following steps 911-917.

In step 911, the controller sends to device 1 an OFPT_BUNDLE_CONTROL message of which the type is OFPBCT_OPEN_REQUEST and the bundle_id is 3, and the OFPT_BUNDLE_CONTROL message indicates to open a bundle numbered as 3, and the flags of the message is OFPBF_ATOMIC which indicates atomic operation. And device 1 checks that there is no bundle numbered as 3 at current after device 1 receives the message, and thus sends to the controller an OFPT_BUNDLE_CONTROL message, of which the type is OFPBCT_OPEN_REPLY, indicating a reply to OFPBCT_OPEN_REQUEST.

In step 912, the controller then sends an OFPT_BUNDLE_ADD message carrying bundle_id 3 to device 1, herein the flags of the OFPT_BUNDLE_ADD message is OFPBF_ATOMIC which indicates atomic operation, and an OFPT_FLOW_MOD (OFPFC ADD) message is carried, and indicates to set a cross in a direction from port P1 to port P2, and the flow table entry carries an AF instruction with af_id 7 (which indicates that a match domain (P1+L1) in the OFPT_FLOW_MOD (OFPFC_ADD) message is a normal connection point in OTN 1:1 linear protection); and the device checks and stores the message after the device receives the message.

In step 913, the controller continues to send an OFPT_BUNDLE_ADD message carrying bundle_id 3 to device 1, herein the flags of the OFPT_BUNDLE_ADD message is OFPBF_ATOMIC which indicates atomic operation, and an OFPT_FLOW_MOD (OFPFC_ADD) message is carried, and indicates to set a cross in a direction from P2 to P1, and the flow table entry carries an AF instruction with af_id 8 (which indicates that a match domain (P2+L2) in the OFPT_FLOW_MOD (OFPFC_ADD) message is a working connection point in OTN 1:1 linear protection, and the TCM5 alarm on the match domain (P2+L2) needs to be monitored); and the device checks the message and continues to store the message after the device receives the message.

In step 914, the controller continues to send an OFPT_BUNDLE_ADD message carrying bundle_id 3 to device 1, herein the flags of the OFPT_BUNDLE_ADD message is OFPBF_ATOMIC which indicates atomic operation, and an OFPT_FLOW_MOD (OFPFC ADD) message is carried, and indicates to set a cross in a direction from P1 to P3, and the flow table entry carries an AF instruction with af_id 7 (which indicates that a match domain (P1+L1) in the OFPT_FLOW_MOD (OFPFC_ADD) message is a normal connection point in OTN 1:1 linear protection); and the device checks the message and still stores the message after the device receives the message.

In step 915, the controller continues to send an OFPT_BUNDLE_ADD message carrying bundle_id 3 to device 1, herein the flags of the OFPT_BUNDLE_ADD message is OFPBF_ATOMIC which indicates atomic operation, and an OFPT_FLOW_MOD (OFPFC_ADD) message is carried, and indicates to set a cross in a direction from P3 to P1, and the flow table entry carries an AF instruction with af_id 9 (AF1 indicates that a match domain (P3+L3) in the OFPT_FLOW_MOD (OFPFC_ADD) message is a protection connection point in OTN 1:1 linear protection, and the TCM5 alarm on the match domain (P3+L3) needs to be monitored); and the device checks the message and continues to store the message after the device receives the message.

In step 916, the controller sends an OFPT_BUNDLE_ADD message carrying bundle_id 3 to device 1, herein an OFPT_GROUP_MOD (OFPGC_ADD) message is carried, and indicates protection group port and resource information which needs to be configured, respectively including protection group type (OFPGT_EXP_OTN_LP_MTON), protection group ID, out-port P1 and label L1, in-port P2 and label L2, and in-port P3 and label L3, and a group attribute carries protection group related parameters, such as WTR time, return type and switching type; and the device checks and stores the message after the device receives the message.

In step 917, the controller sends an OFPT_BUNDLE_CONTROL message carrying bundle_id 3 to device 1 to instruct the device to start to execute the bundle, herein the type of the OFPT_BUNDLE_CONTROL message is OFPBCT_COMMIT_TREQUEST; and the device takes out the four stored OFPT_FLOW_MOD messages and one stored OFPT_GROUP_MOD message, then assembles a cross configuration, protection group configuration and alarm monitoring configuration message which is jointly configured to complete service configuration of the head node, and sends to the controller an OFPT_BUNDLE_CONTROL message of which the type is OFPBCT_COMMIT_REPLY.

In step 92, a service of a middle node (for example, device 2) is configured, and this step is the same as step 72 and thus is not repetitively described.

In step 93, a service of a tail node (for example, device 4) is configured, and this step includes the following steps 931-937.

In step 931, the controller sends to device 4 an OFPT_BUNDLE_CONTROL message of which the type is OFPBCT_OPEN_REQUEST and the bundle_id is 4, and the OFPT_BUNDLE_CONTROL message indicates to open a bundle numbered as 4, and the flags is OFPBF_ATOMIC which indicates atomic operation. And device 1 checks that there is no bundle numbered as 4 at current after device 1 receives the message, and thus sends to the controller an OFPT_BUNDLE_CONTROL message of which the type is OFPBCT_OPEN_REPLY indicating a reply to the opening request.

In step 932, the controller then sends an OFPT_BUNDLE_ADD message carrying bundle_id 4 to device 4, herein the flags of the OFPT_BUNDLE_ADD message is OFPBF_ATOMIC which indicates atomic operation, and an OFPT_FLOW_MOD (OFPFC ADD) message is carried, and indicates to set a cross in a direction from port P6 to port P6, and the flow table entry carries an AF instruction with af_id 7 (which indicates that a match domain (P6+L6) in the OFPT_FLOW_MOD (OFPFC_ADD) message is a normal connection point in 1:1 OTN linear protection); and the device checks and stores the message after the device receives the message.

In step 933, the controller continues to send an OFPT_BUNDLE_ADD message carrying bundle_id 4 to device 4, herein the flags is OFPBF_ATOMIC which indicates atomic operation, and an OFPT_FLOW_MOD (OFPFC_ADD) message is carried, and indicates to set a cross in a direction from P7 to P6, and the flow table entry carries an AF instruction with af_id 8 (which indicates that a match domain (P7+L7) in the OFPT_FLOW_MOD (OFPFC_ADD) message is a working connection point in OTN 1:1 linear protection, and the TCM5 alarm on the match domain (P7+L7) needs to be monitored); and the device checks the message and continues to store the message after the device receives the message.

In step 934, the controller continues to send an OFPT_BUNDLE_ADD message carrying bundle_id 4 to device 4, herein the flags is OFPBF_ATOMIC which indicates atomic operation, and an OFPT_FLOW_MOD (OFPFC ADD) message is carried, and indicates to set a cross in a direction from P6 to P8, and the flow table entry carries an AF instruction with af_id 7 (which indicates that a match domain (P6+L6) in the OFPT_FLOW_MOD (OFPFC_ADD) message is a normal connection point in OTN 1:1 linear protection); and the device checks the message and still stores the message after the device receives the message.

In step 935, the controller continues to send an OFPT_BUNDLE_ADD message carrying bundle_id 4 to device 4, herein the flags is OFPBF_ATOMIC which indicates atomic operation, and an OFPT_FLOW_MOD (OFPFC_ADD) message is carried, and indicates to set a cross in a direction from P8 to P7, and the flow table entry carries an AF instruction with af_id 9 (AF1 indicates that a match domain (P8+L8) in the OFPT_FLOW_MOD (OFPFC_ADD) message is a protection connection point in OTN 1:1 linear protection, and the TCM5 alarm on the match domain (P8+L8) needs to be monitored); and the device checks the message and continues to store the message after the device receives the message.

In step 936, the controller sends an OFPT_BUNDLE_ADD message carrying bundle_id 4 to device 4, herein an OFPT_GROUP_MOD (OFPGC_ADD) message is carried, and indicates protection group port and resource information which needs to be configured, respectively including protection group type (OFPGT_EXP_OTN_LP_MTON), protection group ID, out-port P6 and label L6, in-port P7 and label L7, and in-port P8 and label L8, and a group attribute carries protection group related parameters, such as WTR time, return type and switching type; and the device checks and stores the message after the device receives the message.

In step 937, the controller sends an OFPT_BUNDLE_CONTROL message carrying bundle_id 4 to device 4 to instruct the device to start to execute the bundle, herein the type of the OFPT_BUNDLE_CONTROL message is OFPBCT_COMMIT_TREQUEST; and the device takes out the four stored OFPT_FLOW_MOD messages and one stored OFPT_GROUP_MOD message, then assembles a cross configuration, protection group configuration and alarm monitoring configuration message which is jointly configured to complete service configuration of the head node, and sends to the controller an OFPT_BUNDLE_CONTROL message of which the type is OFPBCT_COMMIT_REPLY.

### Embodiment five

A combination of protection and recovery on the OTN 1+1 linear protection service illustrated in FIG. 6 is performed according to an embodiment of the present invention. Since the middle node does not involve the protection group operation, under a situation of the combination of protection and recovery, the processing mode is similar to those in situations of the establishment and deletion, and thus is not repetitively described. Description is made below only by taking the head node as an example.

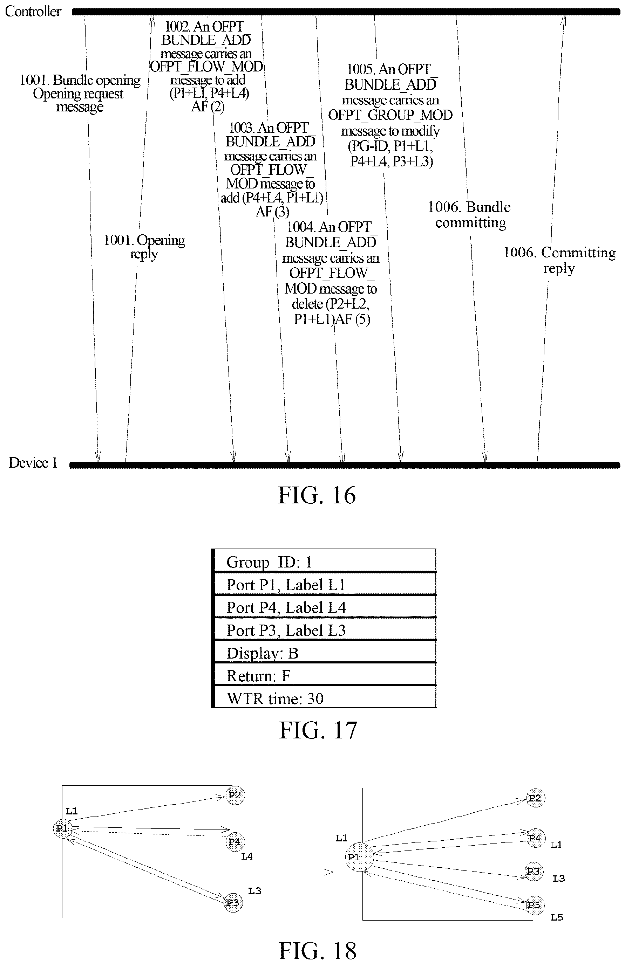

A transport plane on the working path of the service illustrated in FIG. 6 is faulted. After APS (Automatic Protection Switching) on the device receives an alarm, switching to the protection path is immediately performed. After the controller receives the alarm reported by the device, the controller initiates re-routing recovery. Head node crosses before and after recovery are as illustrated in FIG. 15, and a configuration process during recovery is as illustrated in FIG. 16 and includes the following steps 1001-1006.

In step 1001, the controller sends to device 1 an OFPT_BUNDLE_CONTROL message of which the type is OFPBCT_OPEN_REQUEST and the bundle_id is 4, and the OFPT_BUNDLE_CONTROL message indicates to open a bundle numbered as 4, and the flags is OFPBF_ATOMIC which indicates atomic operation. And device 1 checks that there is no bundle numbered as 4 at current after device 1 receives the message, and thus sends to the controller an OFPT_BUNDLE_CONTROL message, of which the type is OFPBCT_OPEN_REPLY, indicating a reply to the opening request.

In step 1002, the controller sends an OFPT_BUNDLE_ADD message carrying bundle_id 4 to device 1, herein the flags is OFPBF_ATOMIC which indicates atomic operation, and an OFPT_FLOW_MOD (OFPFC_ADD) message is carried, and indicates to set a cross in a direction from port P1 to port P4, and the flow table entry carries an AF instruction with af_id 2 (which indicates that a match domain (P1+L1) in the OFPT_FLOW_MOD (OFPFC_ADD) message is a normal connection point in OTN linear protection); and the device checks and stores the message after the device receives the message.

In step 1003, the controller continues to send an OFPT_BUNDLE_ADD message carrying bundle_id 4 to device 1, herein the flags is OFPBF_ATOMIC which indicates atomic operation, and an OFPT_FLOW_MOD (OFPFC_ADD) message is carried, and indicates to set a cross in a direction from P4 to P1, and the flow table entry carries an AF instruction with af_id 3 (which indicates that a match domain (P4+L4) in the OFPT_FLOW_MOD (OFPFC_ADD) message is a working connection point in OTN linear protection, and the TCM5 alarm on the match domain (P4+L4) needs to be monitored); and the device checks the message and continues to store the message after the device receives the message.

In step 1004, the controller continues to send an OFPT_BUNDLE_ADD message carrying bundle_id 4 to device 1, herein the flags is OFPBF_ATOMIC which indicates atomic operation, and an OFPT_FLOW_MOD (OFPFC_DELETE) message is carried, and indicates to delete a cross in a direction from P2 to P1 and delete a carried AF instruction with af_id 5 ((P2+L2) is cancelled to be used as a working connection point in OTN linear protection); and the device checks the message and continues to store the message after the device receives the message.

Herein, if alarm monitoring on port P2 is further needed to be cancelled, an AF instruction with af_id 3 may also be carried in an OFPT_FLOW_MOD (Del) which indicates to simultaneously cancel alarm monitoring on the port.

In step 1005, the controller sends an OFPT_BUNDLE_ADD message carrying bundle_id 4 to device 1 again, herein an OFPT_GROUP_MOD (OFPFC_MODIFY) message is carried, and indicates protection group port and resource information which needs to be configured, respectively including protection group type (OFPGT_EXP_OTN_LP), protection group ID, out-port P1 and its label, in-port P4 and its label, and in-port P3 and its label, and a group attribute carries protection group related parameters, such as WTR time, return type and switching type; and the device checks and stores the message after the device receives the message. Main content in the carried OFPT_GROUP_MOD (OFPGC_MODIFY) message is as illustrated in FIG. 17.

In step 1006, the controller sends an OFPT_BUNDLE_CONTROL message carrying bundle_id 4 to device 1 to instruct the device to start to execute the bundle, herein the type is OFPBCT_COMMIT_REQUEST; and the device takes out the stored OFPT_FLOW_MOD and OFPT_GROUP_MOD messages, then assembles a cross configuration, protection group configuration and alarm monitoring configuration message which is jointly configured to complete service configuration of the head node, and sends to the controller an OFPT_BUNDLE_CONTROL message of which the type is OFPBCT_COMMIT_REPLY.

The processing of the tail node is similar to that of the head node, and just ports, labels and protection group ids are possibly different, and thus is not repetitively described here.

### Embodiment six

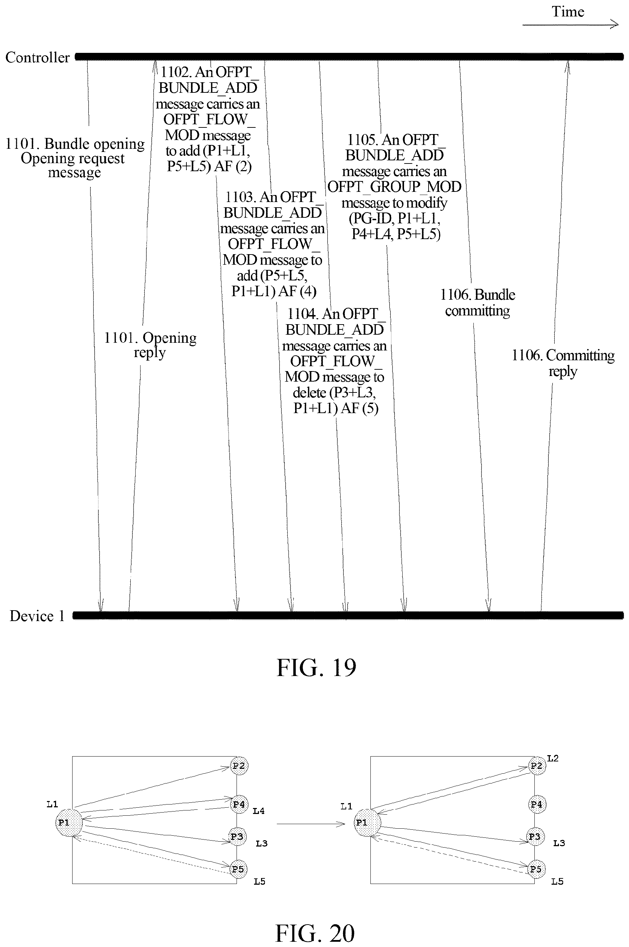

After the working path of the service illustrated in FIG. 6 is faulted for the first time, the transport plane on the protection path thereof is also faulted. After APS (Automatic Protection Switching) on the device receives the alarm, switching to a working recovery path is immediately performed. After the controller receives the alarm reported by the device, re-routing recovery is initiated. Since the middle node does not involve the protection group operation, the processing mode of recovery is similar to those in situations of the establishment and deletion, and thus is not repetitively described. Description is made below just by taking the head node as an example. Head node crosses before and after recovery are as illustrated in FIG. 18, and a configuration process during recovery is as illustrated in FIG. 19 and includes the following steps 1101-1106.

In step 1101, the controller sends to device 1 an OFPT_BUNDLE_CONTROL message of which the type is OFPBCT_OPEN_REQUEST and the bundle_id is 5, and the OFPT_BUNDLE_CONTROL message indicates to open a bundle numbered as 5, and the flags is OFPBF_ATOMIC which indicates atomic operation. And device 1 checks that there is no bundle numbered as 5 at current after device 1 receives the message, and thus sends to the controller an OFPT_BUNDLE_CONTROL message, of which the type is OFPBCT_OPEN_REPLY, indicating a reply to the opening request.

In step 1102, the controller then continues to send an OFPT_BUNDLE_ADD message carrying bundle_id 5 to device 1, herein the flags is OFPBF_ATOMIC which indicates atomic operation, and an OFPT_FLOW_MOD (OFPFC_ADD) message is carried, and indicates to set a cross in a direction from port P1 to port P5, and the flow table entry carries an AF instruction with af_id 2 (which indicates that a match domain (P1+L1) in the OFPT_FLOW_MOD (OFPFC ADD) message is a normal connection point in OTN linear protection); and the device checks and stores the message after the device receives the message.

In step 1103, the controller continues to send an OFPT_BUNDLE_ADD message carrying bundle_id 5 to device 1, herein the flags is OFPBF_ATOMIC which indicates atomic operation, and an OFPT_FLOW_MOD (OFPFC_ADD) message is carried, and indicates to set a cross in a direction from P5 to P1, and the flow table entry carries an AF instruction with af_id 4 (which indicates that a match domain (P5+L5) in the OFPT_FLOW_MOD (OFPFC_ADD) message is a protection connection point in OTN linear protection, and the TCM5 alarm on the match domain (P5+L5) needs to be monitored); and the device checks the message and continues to store the message after the device receives the message.

In step 1104, the controller continues to send an OFPT_BUNDLE_ADD message carrying bundle_id 5 to device 1, herein the flags is OFPBF_ATOMIC which indicates atomic operation, and an OFPT_FLOW_MOD (OFPFC_DELETE) message is carried, and indicates to delete a cross in a direction from P3 to P1 and delete a carried AF instruction with af_id 6 ((P3+L3) is cancelled to be used as a protection connection point in OTN linear protection); and the device checks the message and continues to store the message after the device receives the message.

In step 1105, the controller sends an OFPT_BUNDLE_ADD message carrying bundle_id 5 to device 1 again, herein an OFPT_GROUP_MOD (OFPGC_MODIFY) message is carried, and indicates protection group port and resource information which needs to be configured, respectively including protection group type (OFPGT_EXP_OTN_LP), protection group ID, out-port P1 and its label, in-port P4 and its label, and in-port P5 and its label, and a group attribute carries protection group related parameters.

In step 1106, the controller sends an OFPT_BUNDLE_CONTROL message carrying bundle_id 5 to device 1 to instruct the device to start to execute the bundle, herein the type of the OFPT_BUNDLE_CONTROL message is OFPBCT_COMMIT_TREQUEST; and the device takes out the stored OFPT_FLOW_MOD and OFPT_GROUP_MOD messages, then assembles a cross configuration, protection group configuration and alarm monitoring configuration message which is jointly configured to complete service configuration of the head node, and sends to the controller an OFPT_BUNDLE_CONTROL message of which the type is OFPBCT_COMMIT_REPLY.

The processing of the tail node is similar to that of the head node, and just ports, labels and protection group ids are possibly different, and thus is not repetitively described here.

### Embodiment seven

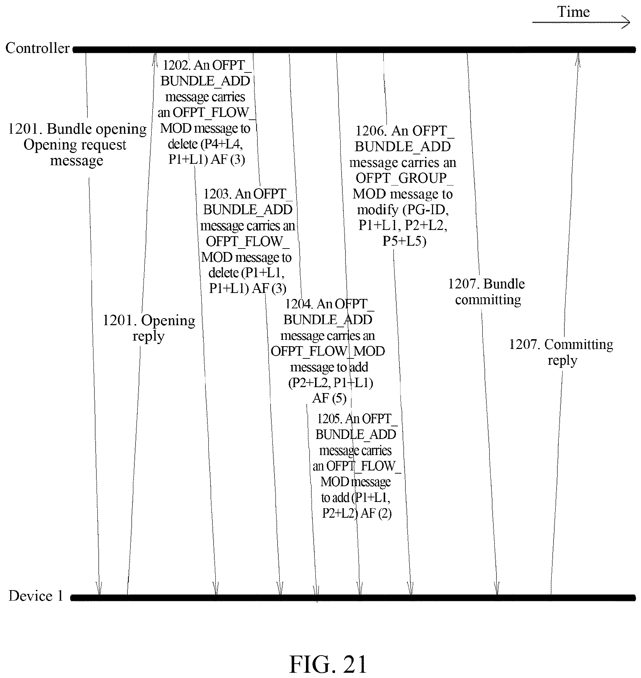

After the service illustrated in FIG. 6 is faulted for previous two times, the fault of the original working path is repaired. Since the service has a return attribute, after the controller receives alarm missing reported by the device, the controller initiates a return action. Since the middle node does not involve protection group operation, the processing mode of return is similar to those in situations of the establishment and deletion, and thus is not repetitively described. Description is made below just by taking the head node as an example. Head node crosses before and after return are as illustrated in FIG. 20, a configuration process during returning is as illustrated in FIG. 21, and a specific process includes the following steps 1201-1207.

In step 1201, the controller sends to device 1 an OFPT_BUNDLE_CONTROL message of which the type is OFPBCT_OPEN_REQUEST and the bundle_id is 6, and the OFPT_BUNDLE_CONTROL message indicates to open a bundle numbered as 6, and the flags is OFPBF_ATOMIC which indicates atomic operation. And device 1 checks that there is no bundle numbered as 6 at current after device 1 receives the message, and thus sends to the controller an OFPT_BUNDLE_CONTROL message, of which the type is OFPBCT_OPEN_REPLY, indicating a reply to the opening request.

In step 1202, the controller continues to send an OFPT_BUNDLE_ADD message carrying bundle_id 6 to device 1, herein the flags is OFPBF_ATOMIC which indicates atomic operation, and an OFPT_FLOW_MOD (OFPFC_DELETE) message is carried, and indicates to delete a cross in a direction from P4 to P1 and delete a carried AF instruction with af_id 3 ((P4+L4) is cancelled to be used as a working connection point in OTN linear protection, and simultaneously the monitoring of the TCM5 alarm on the match domain (P4+L4) is cancelled); and the device checks the message and continues to store the message after the device receives the message.

In step 1203, the controller continues to send an OFPT_BUNDLE_ADD message carrying bundle_id 6 to device 1, herein the flags is OFPBF_ATOMIC which indicates atomic operation, and an OFPT_FLOW_MOD (OFPFC_DELETE) message is carried, and indicates to delete a cross in a direction from P1 to P4 and delete a carried AF instruction with af_id 2 ((P1+L1) is cancelled to be used as a normal connection point in OTN linear protection); and the device checks the message and continues to store the message after the device receives the message.

In step 1204, the controller then continues to send an OFPT_BUNDLE_ADD message carrying bundle_id 6 to device 1, herein the flags is OFPBF_ATOMIC which indicates atomic operation, and an OFPT_FLOW_MOD (OFPFC ADD) message is carried and indicates to set a cross in a direction from P2 to P1, and the flow table entry carries an AF instruction with af_id 5 (which indicates that a match domain (P2+L2) in the OFPT_FLOW_MOD (OFPFC_ADD) message is a working connection point in OTN linear protection); and the device checks and stores the message after the device receives the message.

Herein, if the monitoring of the alarm on the port P2 is canceled previously when the cross in the direction from P2 to P1 is deleted, an AF instruction with af_id 3 may be carried in the OFPT_FLOW_MOD (ADD) message, and indicates to simultaneously monitor the alarm on the port.

In step 1205, the controller then continues to send an OFPT_BUNDLE_ADD message carrying bundle_id 6 to device 1, herein the flags is OFPBF_ATOMIC which indicates atomic operation, and an OFPT_FLOW_MOD (OFPFC_ADD) message is carried and indicates to set a cross in a direction from P1 to P2, and the flow table entry carries an AF instruction with af_id 2 (which indicates that a match domain (P1+L1) in the OFPT_FLOW_MOD (OFPFC_ADD) message is a normal connection point in OTN linear protection); and the device checks and stores the message after the device receives the message.

In step 1206, the controller sends an OFPT_BUNDLE_ADD message carrying bundle_id 6 to device 1 again, herein an OFPT_GROUP_MOD (OFPGC_MODIFY) message is carried and indicates protection group port and resource information which needs to be configured, respectively including protection group type (OFPGT_EXP_OTN_LP), protection group ID, out-port P1 and label L1, in-port P2 and label L2, and in-port P5 and label L5, and a group attribute carries protection group related parameters.

In step 1207, the controller sends an OFPT_BUNDLE_CONTROL message carrying bundle_id 6 to device 1 to instruct the device to start to execute the bundle, herein the type of the OFPT_BUNDLE_CONTROL message is OFPBCT_COMMIT_TREQUEST; and the device takes out the stored OFPT_FLOW_MOD and OFPT_GROUP_MOD messages, then assembles a cross configuration, protection group configuration and alarm monitoring configuration message which is jointly configured to complete service configuration of the head node, and sends to the controller an OFPT_BUNDLE_CONTROL message of which the type is OFPBCT_COMMIT_REPLY.

The processing of the tail node is similar to that of the head node, and just ports, labels and protection group ids are possibly different, and thus is not repetitively described here.

One ordinary skilled in the art can understand that all or partial steps in the above-mentioned methods may be completed by relevant hardware instructed by a program, and the program may be stored in a computer-readable storage medium such as a read-only memory, a magnetic disc or a compact disc. Optionally, all or partial steps in the above-mentioned embodiments may also be implemented by using one or more integrated circuits. Correspondingly, each module/unit in the above-mentioned embodiments may be implemented by means of hardware and may also be implemented by means of a software function module. The present invention is not limited to combinations of hardware and software in any specific form.

Of course, the present invention may also have other various embodiments. One skilled in the art may make various corresponding changes and variations according to the present invention without departing from the rule and essence of the present invention. However, these corresponding changes and variations shall be all included in the protective scope of the claims of the present invention.

### Industrial Applicability

The above-mentioned technical solution can simplify the configuration process and shorten the configuration time.

## Claims

1. A service protection setting method, comprising:
a controller sending an OpenFlow message to an optical network node device to instruct the optical network node device to set service protection;
wherein the optical network node device comprises a head node, a middle node and a tail node, and
the step of a controller sending an OpenFlow message to an optical network node device comprises:
the controller sending a flow configuration message and a group configuration message to the head node, and the controller sending a flow configuration message to the middle node, and the controller sending a flow configuration message and a group configuration message to the tail node.

2. The method according to claim 1, wherein the step of a controller sending an OpenFlow message to an optical network node device further comprises:
the controller sending an Autonomous Function, AF, configuration message to the optical network node device and configuring an AF table entry for the optical network node device; and
the flow configuration messages sent by the controller to the head node and the tail node carrying an identification of the AF table entry.

3. The method according to claim 1, wherein,
the flow configuration message comprises cross configuration information, and a number of the flow configuration messages is equal to a number of crosses to be configured, and one flow configuration message is used for configuring one cross and the group configuration message comprises protection group configuration information.

4. The method according to claim 2, wherein,
the AF table entry comprises protection group member role information and alarm monitoring configuration information.

5. The method according to any one of claims 2-4, wherein,
the flow configuration message and the group configuration message are carried in a bundle message, and bundle messages sent to a same network node device carry a same bundle identification.

6. A service protection setting method, comprising:
an optical network node device receiving an OpenFlow message sent by a controller, and setting service protection according to an instruction of the OpenFlow message;
wherein,
the step of an optical network node device receiving an OpenFlow message sent by a controller comprises:
when the optical network node device is a head node or a tail node, receiving a flow configuration message and a group configuration message sent by the controller; and
when the optical network node device is a middle node, receiving a flow configuration message sent by the controller.

7. The method according to claim 6, wherein the step of an optical network node device receiving an OpenFlow message sent by a controller further comprises:
the optical network node device receiving an Autonomous Function, AF, configuration message sent by the controller, and saving an AF table entry configured by the controller for the network node device according to the AF configuration message; and
when the optical network node device is a head node or a tail node, the received flow configuration message carrying an AF identification.

8. The method according to claim 7, wherein,
the flow configuration message and the group configuration message are carried in a bundle message, and bundle messages sent to a same network node device carry a same bundle identification.

9. The method according to claim 8, wherein,
the flow configuration message and the group configuration message are carried in a bundle addition message, and the step of setting service protection according to an instruction of the OpenFlow message comprises:
when the optical network node device is a head node or a tail node, receiving a bundle addition message sent by the controller, saving the flow configuration message and the group configuration message carried in the bundle addition message, and after a bundle execution message is received, performing cross configuration, alarm monitoring configuration and protection group configuration according to the flow configuration message and the group configuration message; and
when the optical network node is a middle node, receiving a bundle addition message sent by the controller, saving the flow configuration message carried in the bundle addition message, and after a bundle execution message is received, performing cross configuration according to the flow configuration message.

10. The method according to claim 9, wherein,
the step of performing cross configuration, alarm monitoring configuration and protection group configuration according to the flow configuration message and the group configuration message comprises:
performing the cross configuration according to the flow configuration message, performing the alarm monitoring configuration according to alarm monitoring configuration information in the AF table entry corresponding to the AF identification carried in the flow configuration message, and performing the protection group configuration in combination with protection group member role information in the AF table entry and the group configuration message.

11. A controller, comprising:
a sending unit configured to send an OpenFlow message to an optical network node device to instruct the optical network node device to set service protection;
wherein the optical network node device comprises a head node, a middle node and a tail node, and
the sending unit comprises:
a first sending module configured to send a flow configuration message and a group configuration message to the head node;
a second sending module configured to send a flow configuration message to the middle node; and
a third sending module configured to send a flow configuration message and a group configuration message to the tail node.

12. The controller according to claim 11, wherein the controller further comprises:
a configuration unit configured to configure an Autonomous Function, AF, table entry for the optical network node device;
the sending unit further comprises a fourth sending module configured to send an AF configuration message to the optical network node device; and
the flow configuration messages sent by the first sending module and the third sending module carry an identification of the AF table entry.

13. The controller according to claim 11, wherein,
the flow configuration message comprises cross configuration information, and a number of the flow configuration messages is equal to a number of crosses to be configured, and one flow configuration message is used for configuring one cross, and the group configuration message comprises protection group configuration information.

14. The controller according to claim 12, wherein,
the AF table entry comprises alarm monitoring configuration information and protection group member role information.

15. The controller according to any one of claims 11-14, wherein,
the flow configuration message and the group configuration message are carried in a bundle message, and bundle messages sent to a same network node device carry a same bundle identification.

16. An optical network node device, comprising:
a receiving unit configured to receive an OpenFlow message sent by a controller; and
a protection setting unit configured to set service protection according to an instruction of the OpenFlow message,
wherein the OpenFlow message comprises a flow configuration message and a group configuration message;
when the network node device is a head node or a tail node, the receiving unit is configured to receive the flow configuration message and the group configuration message sent by the controller; and
when the network node device is a middle node, the receiving unit is configured to receive the flow configuration message sent by the controller.

17. The optical network node device according to claim 16, wherein,
the OpenFlow message further comprises an Autonomous Function, AF, configuration message which is used for configuring an AF table entry for the optical network node device;
the optical network node device further comprises:
a saving unit configured to save the AF table entry configured by the controller for the optical network node device; and
when the network node device is a head node or a tail node, the flow configuration message received by the receiving unit carries an AF identification.

18. The optical network node device according to claim 17, wherein,
the flow configuration message and the group configuration message are carried in a bundle message, and bundle messages sent to a same network node device carry a same bundle identification.

19. The optical network node device according to claim 18, wherein,
the flow configuration message and the group configuration message are carried in a bundle addition message;
when the optical network node device is a head node or a tail node, the receiving unit is configured to receive the bundle addition message sent by the controller, the saving unit is further configured to save the flow configuration message and the group configuration message carried in the bundle addition message, and the protection setting unit is configured to, after the receiving unit receives a bundle execution message, perform cross configuration, alarm monitoring configuration and protection group configuration according to the flow configuration message and the group configuration message; and
when the optical network node device is a middle node, the receiving unit is configured to receive the bundle addition message sent by the controller, the saving unit is further configured to save the flow configuration message carried in the bundle addition message, and the protection setting unit is configured to, after the receiving unit receives a bundle execution message, perform cross configuration according to the flow configuration message.

20. The optical network node device according to claim 19, wherein,
when the optical network node device is a head node or a tail node, the protection setting unit is configured to, after the receiving unit receives the bundle execution message, perform the cross configuration according to the flow configuration message, perform the alarm monitoring configuration according to alarm monitoring configuration information in the AF table entry corresponding to the AF identification carried in the flow configuration message, and perform the protection group configuration in combination with group member role information in the AF table entry and the group configuration message.
